# EUROPÄISCHE PATENTANMELDUNG

(11) **EP 3 012 538 A1**
(43) Veröffentlichungstag der Anmeldung: **27.04.2016**
(21) Anmeldenummer: 15190425.7
(22) Anmeldetag: 19.10.2015
(51) Int. Cl.: F24D 3/14, E04F 15/18, F24D 3/12

(54) **MONTAGEPLATTE FÜR EIN FLÄCHENHEIZ- UND KÜHLSYSTEM**

(30) Priorität: 21.10.2014 DE 202014008401 U
(71) Anmelder: Hirsch Porozell GmbH, 9555 Glanegg (AT)
(72) Erfinder: Die Erfindernennung liegt noch nicht vor
(74) Vertreter: Solf, Annkathrin

(57) **Zusammenfassung**

Die Erfindung betrifft eine Montageplatte (1) zum Verlegen von Rohrleitungen (15) eines Heiz- bzw. Kühlkreislaufs eines Flächenheiz- und kühlsystems aufweisend:
a) eine Plattenoberseite (2) und eine Plattenunterseite (3),
b) von der Plattenoberseite (2) abstehende erste Noppen (11) und zweite Noppen (12), wobei zwischen den Noppen (11;12) sich senkrecht kreuzende Rohraufnahmekanäle (14a;14b) und sich diagonal kreuzende Rohraufnahmekanäle (14c;14d) gebildet werden, wobei
die Noppen (11;12) derart angeordnet sind, dass zwei Montageplatten (1), deren Plattenoberseiten (2) einander zugewandt sind, derart aufeinander stapelbar sind, dass die Noppen (11;12) der einen Montageplatte (1) in Noppenzwischenräume zwischen den Noppen (11;12) der anderen Montageplatte (1) eingreifen.

## Beschreibung

Die vorliegende Erfindung betrifft eine Montageplatte zum Verlegen von Rohrleitungen eines Heiz- bzw. Kühlkreislaufs eines Flächenheiz- und kühlsystems, insbesondere einer Fußbodenheizungsanlage.

Eine Fußbodenheizungsanlage weist üblicherweise wenigstens eine ein Arbeitsmedium, z.B. Wasser, führende Rohrleitungsanordnung auf, die in die Bodenschicht integriert ist. Üblicherweise ist die Rohrleitungsanordnung in die Estrichschicht eingegossen. Dabei ist es hinsichtlich einer optimalen Heiz- bzw. Kühlwirkung erforderlich, dass die Rohrleitungen möglichst gleichmäßig auf dem Boden verteilt angeordnet und bis zum Abbinden des Estrichs in ihrer Position fixiert sind.

In diesem Zusammenhang hat sich die Verwendung von aneinander reihbaren Systemplatten oder Noppenplatten mit noppenartigen Erhöhungen bewährt, wobei Noppenzwischenräume zwischen den Erhöhungen Rohrkanäle bilden, in denen die Rohrleitungen in einem definierten Verlegeabstand geführt und gehaltert sind. Dabei sind die Noppenplatten üblicherweise derart ausgebildet, dass sie zu einem Noppenteppich aneinander gereiht werden können, wobei die Rohrkanäle von benachbarten Noppenplatten zueinander fluchtend angeordnet sind. Der Noppenteppich weist somit plattenübergreifende durchgehende Rohrkanäle auf, in denen die gesamte Rohranordnung der Fußbodenheizungsanlage verlegbar ist.

In der Regel werden Rohrleitungen, insbesondere aus Kunststoff, mit einem Außendurchmesser von 10 bis 25 mm verwendet.

Aus der AT 003 402 U1 ist eine Montageplatte mit nach oben ragenden, noppenförmigen Vorsprüngen bekannt, wobei die Vorsprünge in einem Raster in der Form von auf der Spitze stehenden Quadraten angeordnet sind. Dabei weisen die Vorsprünge einen runden oder quadratischen Grundkörper sowie seitliche, sich nach oben hin erweiternde Wülste auf. Zwar ermöglicht die Montageplatte eine parallele, mäanderförmige Verlegung der Heizungsrohre. Jedoch ist die Montageplatte nicht geeignet, um die Heizungsrohre diagonal, d.h. in einem Winkel von 45°, zu verlegen.

Die DE 699 05 419 T2 offenbart eine Bodenplatte mit Noppen, die definiert sind durch ein erstes quadratisches Gitter von Rohrverlaufsbahnen mit Modulus (a) kombiniert mit einem zweiten quadratischen Gitter mit Modulus (a√2), das gegenüber dem ersten Gitter um 45° geneigt ist und einen Ursprung hat, der in der Mitte einer Seite eines Quadrats des ersten Gitters liegt. Die Bodenplatte weist somit horizontalsymmetrische, fünfseitige Noppen mit im Querschnitt jeweils einer vertikalen, zwei horizontalen und zwei diagonalen Rohranlageflächen auf, wobei die beiden diagonalen Anlageflächen in einem Diagonalflächenwinkel von 90° ineinander übergehen. Die Noppen sind horizontal fluchtend in mehreren Reihen angeordnet, so dass, in horizontale Richtung gesehen, die Diagonalflächenwinkel abwechselnd aufeinander zu und voneinander weg weisen. Dabei sind die einzelnen Noppenreihen horizontal versetzt, so dass die Diagonalflächenwinkel vertikal benachbarter Noppen in entgegengesetzte Richtungen weisen, und die Diagonalflächenwinkel von diagonal benachbarten Noppen jeweils in dieselbe Richtung weisen, wobei jeweils die ersten diagonalen Anlageflächen und die zweiten diagonalen Anlageflächen diagonal benachbarter Noppen in derselben diagonalen Ebene liegen. Des Weiteren sind die Abstände der vertikalen Anlageflächen von benachbarten, voneinander wegweisenden Noppen sowie die Abstände von vertikal benachbarten horizontalen Anlagenflächen sowie die Abstände von diagonal benachbarten diagonalen Anlagenflächen jeweils gleich dem Rohrdurchmesser. Somit sind die Abstände der vertikalen Anlageflächen von benachbarten, aufeinander zu weisenden Noppen jeweils größer als der Rohrdurchmesser. Dadurch sind vertikal verlegte Rohre nicht von allen sondern lediglich von den voneinander wegweisenden Noppen, also jedem zweiten Noppenpaar, gehaltert.

Aufgabe der vorliegenden Erfindung ist die Bereitstellung einer verbesserten Montageplatte für Fußbodenheizungssysteme mit insbesondere hoher Noppentragfestigkeit und hoher Noppenformstabilität, einer hohen Anzahl von Abstützungen bezüglich der Rohre und geringem Packmaß für Transport und Lagerung.

Diese Aufgabe wird durch eine Montageplatte mit den Merkmalen von Anspruch 1 gelöst. Vorteilhafte Weiterbildungen der Erfindung werden in den jeweils abhängigen Unteransprüchen gekennzeichnet.

Die Montageplatte zum Verlegen von Rohrleitungen eines Heiz- bzw. Kühlkreislaufs eines Flächenheiz- und kühlsystems weist auf:
a) eine Plattenoberseite und eine Plattenunterseite,
b) eine erste Plattenbreitenrichtung, eine dazu senkrechte, zweite Plattenbreitenrichtung, eine zur ersten und zweiten Plattenbreitenrichtung senkrechte Plattenhöhenrichtung, eine erste Plattendiagonalrichtung, die mit der ersten und zweiten Plattenbreitenrichtung einen Winkel von 45° einschließt, und eine zur ersten Plattendiagonalrichtung senkrechte, zweite Plattendiagonalrichtung,
c) erste und zweite von der Plattenoberseite in Plattenhöhenrichtung abstehende Noppen, wobei zwischen den Noppen sich in die erste Plattenbreitenrichtung erstreckende Rohraufnahmekanäle, sich in die zweite Plattenbreitenrichtung erstreckende Rohraufnahmekanäle, sich in die erste Diagonalrichtung erstreckende Rohraufnahmekanäle und sich in die zweite Diagonalrichtung erstreckende Rohraufnahmekanäle gebildet werden, wobei
die Noppen derart angeordnet sind, dass zwei Montageplatten, deren Plattenoberseiten einander zugewandt sind, derart aufeinander stapelbar sind, dass die Noppen der einen Montageplatte in Noppenzwischenräume zwischen den Noppen der anderen Montageplatte eingreifen bzw. in diesen angeordnet sind.

Im Folgenden wird die Erfindung anhand einer Zeichnung beispielhaft näher erläutert. Es zeigen dabei:
- Fig. 1: eine perspektivische Draufsicht auf eine erfindungsgemäße Montageplatte;
- Fig. 2: eine schematische Draufsicht auf die erfindungsgemäße Montageplatte;
- Fig. 3a: eine perspektivische Schnittansicht von zwei aufeinandergestapelten erfindungsgemäßen Montageplatten, wobei jeweils die Noppen der einen Platte in die Noppenzwischenräume der anderen Platte eingreifen;
- Fig. 3b: die Ansicht nach Fig. 3a, wobei die obere Platte zur Verdeutlichung der Position der einzelnen Noppen transparent dargestellt ist;
- Fig. 4: eine schematische Draufsicht der Plattenanordnung gemäß Fig. 3a;
- Fig. 5: eine schematische Draufsicht auf die erfindungsgemäße Montageplatte gemäß einer weiteren Ausführungsform, wobei verschiedene Noppenausgestaltungen beispielhaft dargestellt sind;
- Fig. 6: eine schematische Schnittansicht der Montageplatte gemäß Fig. 5 entlang einer Schnittlinie A-A.

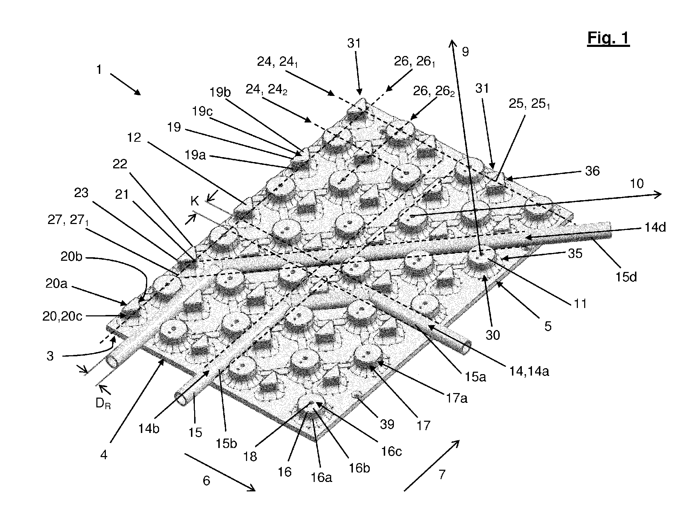

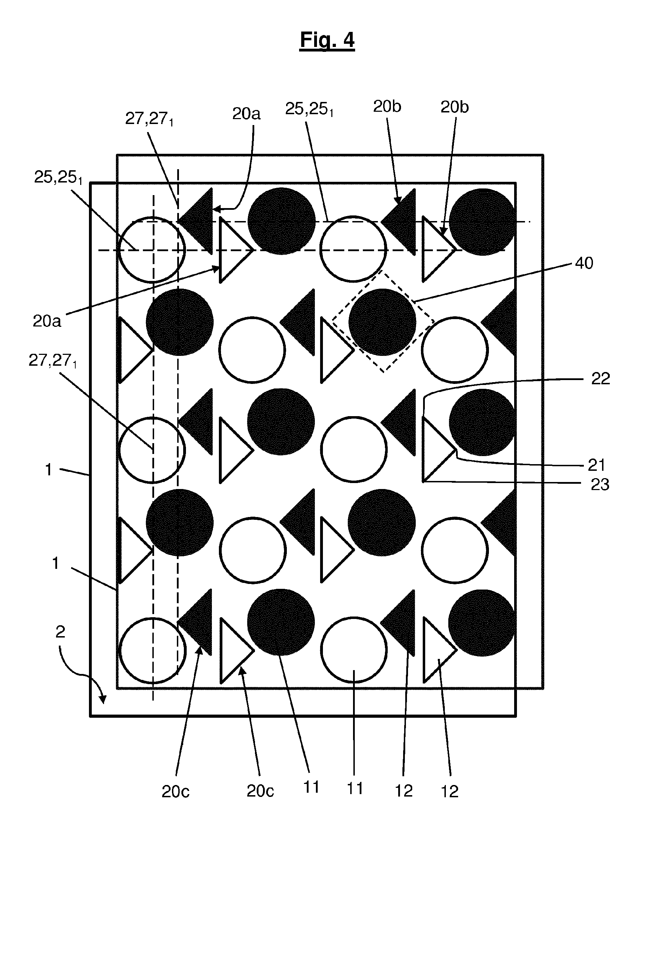

Gemäß einer ersten Ausführung ist die erfindungsgemäße Montageplatte 1 (Fig. 1-4) quaderförmig ausgebildet und weist eine, bevorzugt ebenflächige, Plattenoberseite 2, eine dieser gegenüberliegende und insbesondere hierzu parallele, bevorzugt ebenflächige, Plattenunterseite 3, sowie vier paarweise aneinander angrenzende und paarweise zueinander senkrechte, bevorzugt ebenflächige, Plattenkantenflächen 4;5 auf.

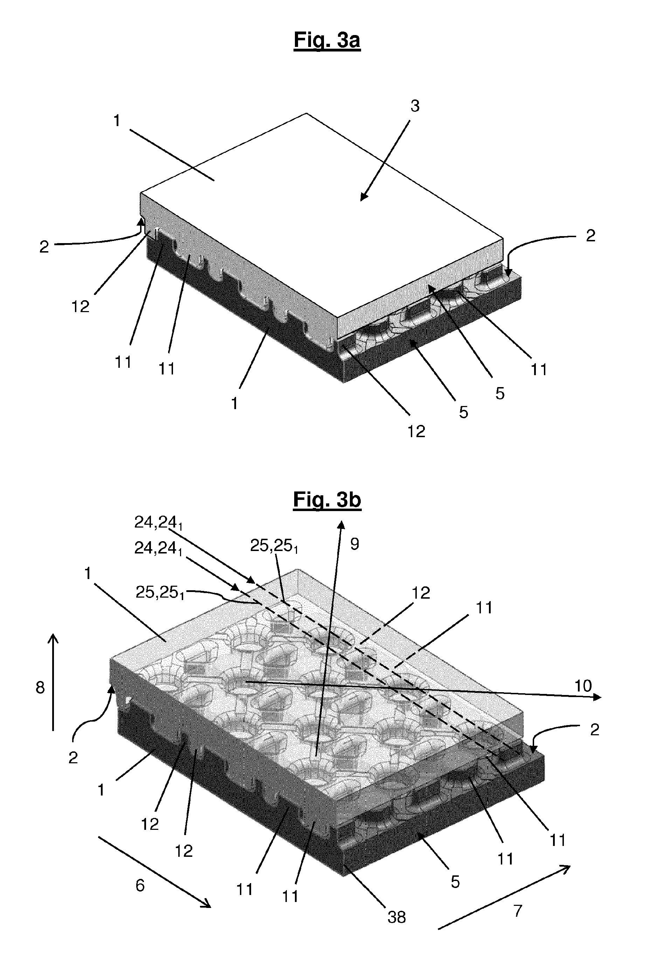

Die Montageplatte 1 weist zudem eine erste Plattenerstreckung bzw. Plattenbreitenrichtung 6, eine dazu senkrechte zweite Plattenerstreckung bzw. Plattenbreitenrichtung 7 und eine zur ersten und zweiten Plattenbreitenrichtung 6;7 senkrechte Plattendickenerstreckung bzw. Plattenhöhenrichtung 8 auf (Fig. 3b). Des Weiteren weist die Montageplatte 1 eine erste Plattendiagonalerstreckung bzw. Plattendiagonalrichtung 9, welche mit der ersten und zweiten Plattenbreitenrichtung 6;7 einen Winkel von 45° einschließt und eine zur ersten Plattendiagonalrichtung 9 senkrechte, zweite Plattendiagonalerstreckung bzw. Plattendiagonalrichtung 10 auf. Die Plattenkantenflächen 4;5 erstrecken sich dabei jeweils parallel zu einer der beiden Plattenbreitenrichtungen 6;7.

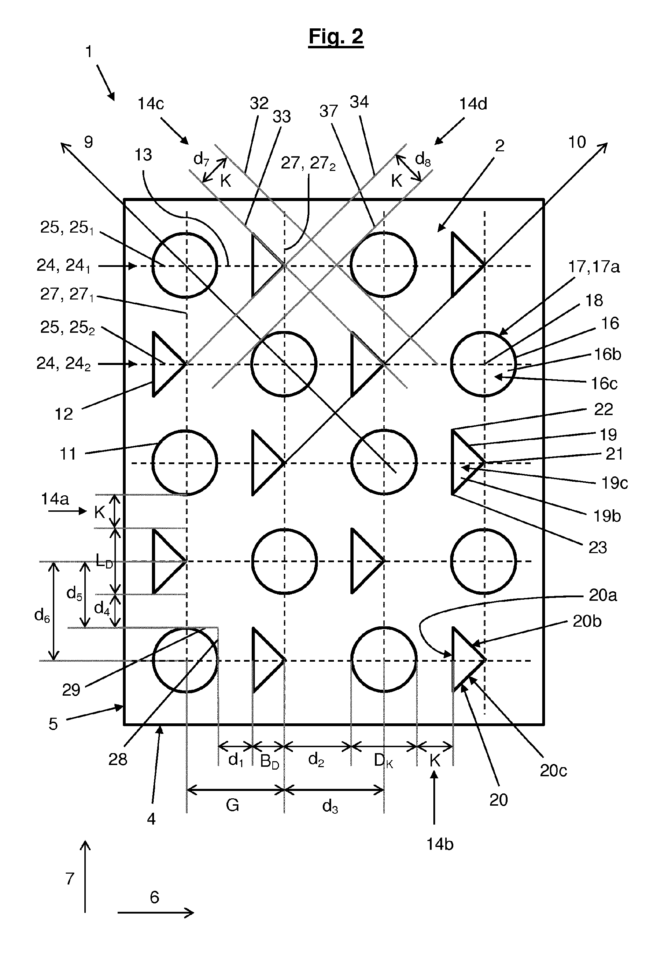

Des Weiteren weist die Montageplatte 1 von der Plattenoberseite 2 in Plattenhöhenrichtung 8, bevorzugt senkrecht, abstehende erste, bevorzugt im Querschnitt kreisrunde, und zweite, bevorzugt im Querschnitt dreieckige, Erhöhungen bzw. Noppen 11 ;12 auf. Die Noppen 11 ;12 sind vorzugsweise an die Plattenoberseite 2 einstückig angeformt bzw. sind mit der Plattenoberseite 2 einstückig verbunden. Die Noppen 11;12 sind zudem in einem bestimmten quadratischen Raster bzw. Gitter 13 (Fig. 2) in der ersten und zweiten Plattenbreitenrichtung 6;7 nebeneinander angeordnet, so dass auf der Montageplatte 1 zwischen den Noppen 11;12 mehrere Rohraufnahmekanäle 14 zur Aufnahme zumindest einer Rohrleitung 15 (Fig. 1) bzw. einer Rohrleitungsanordnung einer Fußbodenklimatisierungsanlage (nicht dargestellt) gebildet werden. Hierauf wird weiter unten genauer eingegangen. Die Noppen 11;12 dienen somit zur Befestigung bzw. Halterung der Rohrleitungen 15 auf der Montageplatte 1.

Die runden Noppen 11 bzw. Kreisnoppen 11 weisen jeweils einen sich in Plattenhöhenrichtung 8 von der Plattenoberseite 2 weg erstreckenden kreiszylindrischen Noppengrundkörper 16 bzw. Kreisnoppengrundkörper 16 auf. Das heißt, der Kreisnoppengrundkörper 16 weist die Form eines geraden Kreiszylinders auf. Der Kreisnoppengrundkörper 16 weist ein erstes, plattenseitiges, in die Plattenoberfläche 2 übergehendes bzw. sich an die Plattenoberseite 2 anschließendes Kreisnoppenende 16a und ein zweites, freies Kreisnoppenendende 16b mit einer Kreisnoppenoberseite 16c auf. Zudem weist der Kreisnoppengrundkörper 16 eine kreiszylindrische Kreisnoppenmantelfläche 17 auf, welche als Rohranlagefläche 17a bzw. Kreisnoppen-Rohranlagefläche 17a dient. Außerdem weist der Kreisnoppengrundkörper 16 eine zur Plattenhöhenrichtung 8 parallele Zylinderachse bzw. Kreisnoppengrundkörperachse 18 und einen Kreisnoppendurchmesser D_{K} auf. Der Kreisnoppendurchmesser D_{K} entspricht vorzugsweise im Wesentlichen dem Zweifachen einer Rohraufnahmekanalbreite K, wobei ein Rohrleitungsdurchmesser D_{R} der zu verlegenden Rohrleitung 15 besonders bevorzugt der Rohraufnahmekanalbreite K entspricht.

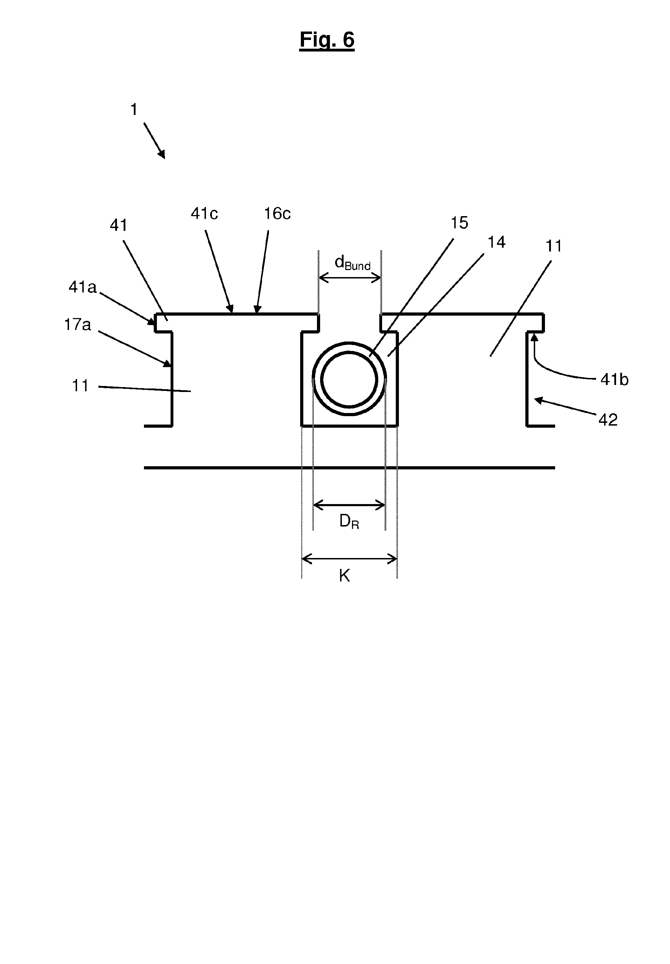

Vorzugsweise sind am freien Kreisnoppenende 16b zudem über die Rohranlagefläche 17a radial in Bezug zur Kreisnoppenachse 18 überstehende Widerlagerelemente, insbesondere in Form von beabstandeten Vorsprüngen oder in Form eines durchgehenden Ringbundes 41, vorgesehen (Fig. 6). Im Folgenden wird die Wirkungsweise der Widerlagerelemente an Hand des Ringbundes 41 näher erläutert. Das heißt, der Ringbund 41 bzw. die Widerlagerelemente überragen die Rohranlagefläche 17a in radialer Richtung. Der Ringbund 41 weist eine Ringbundumfangsfläche 41 a, eine Ringbundunterseite 41 b und eine Ringbundoberseite 41 c auf. Zweckmäßigerweise ist die Ringbundoberseite 41 c in Plattenhöhenrichtung 8 bündig mit der Kreisnoppenoberseite 16c. Der Ringbund 41 dient in an sich bekannter Weise zur Sicherung der Rohrleitung 15 in Plattenhöhenrichtung 8, worauf weiter unten näher eingegangen wird. Die Kreisnoppe 11 bzw. der Kreisnoppengrundkörper 16 weist somit im Bereich des ersten Kreisnoppenendes 16a einen Hinterschnitt 42 bzw. eine Einschnürung auf.

Die dreieckigen Noppen 12 bzw. Dreiecknoppen 12 weisen jeweils einen sich in Plattenhöhenrichtung 8 von der Plattenoberfläche 2 weg erstreckenden, prismatischen Dreiecknoppengrundkörper 19 mit dreieckigem Querschnitt auf. Das heißt der Dreiecknoppengrundkörper 19 weist die Form eines geraden Prismas mit dreieckiger Grundfläche auf. Der prismatische Dreiecknoppengrundkörper 19 weist ein erstes, in die Plattenoberfläche 2 übergehendes Dreiecknoppenende 19a und ein zweites, freies Dreiecknoppenende 19b mit einer Dreiecknoppenoberseite 19c sowie eine Prismaumfangsfläche bzw. -mantelfläche 20 bzw. Dreiecknoppenmantelfläche 20 auf. Vorzugsweise hat der Querschnitt des Dreiecknoppengrundkörpers 19 dabei die Form eines gleichschenklig rechtwinkligen Dreiecks. Die Dreiecknoppenmantelfläche 20 weist somit drei jeweils paarweise aneinander grenzende Schenkelflächen bzw. Dreiecknopen-Rohranlageflächen 20a;20b;20c auf. Insbesondere weist die Dreiecknoppenmantelfläche 20 eine Hypotenusenfläche 20a und zwei Kathetenflächen 20b;c auf. Die beiden Kathetenflächen 20b;c schließen miteinander einen rechten Winkel ein und gehen über eine zur Plattenhöhenrichtung 8 parallele Kathetenkante 21 ineinander über. Zudem schließen die beiden Kathetenflächen 20b;c jeweils mit der Hypotenusenfläche 20a einen Winkel von 45° ein und gehen über eine zur Plattenhöhenrichtung 8 parallele Hypotenusenkante 22;23 in diese über. Die Hypotenusenfläche 20a ist zudem senkrecht zur ersten Plattenbreitenrichtung 6 und die beiden Kathetenflächen 20b;c schließen mit der ersten und der zweiten Plattenbreitenrichtung 6;7 jeweils einen 45° Winkel ein.

Vorzugsweise entspricht eine Länge L_{D} bzw. Dreiecknoppenlänge der Hypotenusenfläche 20a, also die Erstreckung der Hypotenusenfläche 20a in die zweite Plattenbreitenrichtung 7, dem Durchmesser D_{K} des kreisförmigen Noppengrundkörpers 16 der Kreisnoppen 11 und somit der zweifachen Kanalbreite K.

Dementsprechend ist eine Dreiecknoppenbreite B_{D}, d.h. ein Abstand B_{D} parallel zur ersten Breitenrichtung 6 zwischen der Hypotenusenfläche 20a und der Kathetenkante 21, gleich dem halben Kreisnoppendurchmesser D_{K} und somit gleich der Kanalbreite K.

Analog wie bei den Kreisnoppen 11 weisen die Dreiecknoppen 12 an ihrem freien Ende 19b vorzugsweise ebenfalls über die Prismaumfangsfläche 20 bzw. die Schenkelflächen 20a;20b;20c nach außen überstehende Widerlagerelemente, insbesondere in Form von beabstandeten Vorsprüngen oder in Form eines durchgehenden Bundstegs (nicht dargestellt), auf. Im Folgenden wird die Wirkungsweise der Widerlagerelemente an Hand des Bundstegs näher erläutert. Das heißt, der Dreiecknoppenbundsteg bzw. die Widerlagerelemente überragen die Prismaumfangsfläche 20 allseitig senkrecht zur Plattenhöhenrichtung 8. Dreiecknoppenbundsteg weist eine Dreiecknoppenbundstegumfangsfläche, eine Dreiecknoppenbundstegoberseite und eine Dreiecknoppenbundstegunterseite auf. Zweckmäßigerweise ist die Dreiecknoppenbundstegoberseite in Plattenhöhenrichtung 8 bündig mit der Dreiecknoppenoberseite 19c. Die Dreiecknoppe 12 bzw. der Dreicknoppengrundkörper 19 weisen somit im Bereich des ersten Dreiecknoppenendes 19a einen Hinterschnitt bzw. eine Einschnürung (nicht dargestellt) auf.

Die Kreis- und Dreiecknoppen 11;12 sind in die erste Breitenrichtung 6 gesehen alternierend bzw. abwechselnd in Noppenreihen 24 angeordnet. Das heißt, zwischen den beiden sich in die erste Plattenbreitenrichtung 6 gegenüberliegenden Plattenkantenflächen 5 ist neben jeder Kreisnoppe 11 in die erste Plattenbreitenrichtung 6 versetzt eine Dreiecknoppe 12 angeordnet bzw. jede Kreisnoppe 11 ist benachbart zu einer Dreiecknoppe 12 angeordnet und umgekehrt. Dabei liegen die Kreisnoppenachsen 18 der Kreisnoppengrundkörper 16 und die Kathetenkanten 21 der Dreiecknoppengrundkörper 19 einer Noppenreihe 24 jeweils in die zweite Plattenbreitenrichtung 7 gesehen auf derselben Höhe bzw. die Kreisnoppenachsen 18 und die Kathetenkanten 21 einer Noppenreihe 24 sind in die erste Plattenbreitenrichtung 6 zueinander fluchtend angeordnet.

Somit liegen die Kreisnoppenachsen 18 der Kreisnoppengrundkörper 16 und die Kathetenkanten 21 der Dreiecknoppengrundkörper 19 einer Noppenreihe 24 jeweils auf einer gedachten, in einer zur ersten Plattenbreitenrichtung 6 parallelen Aufreihlinie 25. Eine erste Aufreihlinie 25₁ verläuft dementsprechend durch die jeweiligen Kreisnoppenachsen 18 und Kathetenkanten 21 einer ersten Noppenreihe 24₁, eine zweite Aufreihlinie 25₂ verläuft durch die jeweiligen Kreisnoppenachsen 18 und Kathetenkanten 21 einer zweiten Noppenreihe 24₂ und eine n-te Aufreihlinie 25ₙ verläuft durch die jeweiligen Kreisnoppenachsen 18 und Kathetenkanten 21 einer n-ten Noppenreihe 24ₙ.

Zudem sind die Dreiecknoppen 12 jeweils derart ausgerichtet, dass die Hypotenusenfläche 20a zu dem einen benachbarten Kreisnoppen 11 hin gewandt ist und die Kathetenkante 21 dem anderen benachbarten Kreisnoppen 11 zugewandt ist. Somit sind die in die erste Plattenbreitenrichtung 6 alternierend angeordneten Kreis- und Dreiecknoppen 11;12 in die erste Plattenbreitenrichtung 6 gesehen zueinander fluchtend angeordnet.

Des Weiteren sind die Dreiecknoppen 12 von den Kreisnoppen 11 in die erste Plattenbreitenrichtung 6 jeweils derart beabstandet, dass ein Abstand d₁ zwischen der Hypotenusenfläche 20a und der Kreisnoppenmantelfläche 20 der hierzu benachbarten Kreisnoppe 11 in etwa der Kanalbreite K, insbesondere dem Rohrdurchmesser D_{R} der Rohrleitung 15, entspricht. Demgegenüber ist ein Abstand d₂ zwischen der Kathetenkante 21 der Dreiecknoppe 12 und der Kreisnoppenmantelfläche 20 der hierzu in die erste Plattenbreitenrichtung 6 benachbarten Kreisnoppe 11 in etwa zweimal so groß wie der Abstand d₁ bzw. die Kanalbreite K. Somit ist jeweils ein Abstand d₃ zwischen der Kathetenkante 21 der Dreiecknoppe 12 und der Kreisnoppengrundkörperachse 18 der jeweils hierzu in die erste Plattenbreitenrichtung 6 benachbarten Kreisnoppe 11 in etwa dreimal so groß wie der Abstand d₁ bzw. die Kanalbreite K.

In die zweite Plattenbreitenrichtung 7 gesehen sind die Kreisnoppen 11 und Dreiecknoppen 12 alternierend bzw. abwechselnd in Noppenspalten 26 angeordnet. Das heißt, zwischen den beiden sich in die zweite Plattenbreitenrichtung 7 gegenüberliegenden Plattenkantenflächen 4 ist neben jeder Kreisnoppe 11 in die zweite Plattenbreitenrichtung 7 gesehen eine Dreiecknoppe 12 angeordnet bzw. jede Kreisnoppe 11 ist in die zweite Plattenbreitenrichtung 7 gesehen benachbart zu einer Dreiecknoppe 12 angeordnet und umgekehrt. Dabei liegen die Kreisnoppenachsen 18 der Kreisnoppengrundkörper 16 und die Kathetenkanten 21 der Dreiecknoppengrundkörper 19 einer Noppenspalte 26 jeweils in die erste Plattenbreitenrichtung 6 gesehen auf derselben Höhe bzw. die Kreisnoppenachsen 18 und die Kathetenkanten 21 einer Noppenspalte 26 sind in die zweite Plattenbreitenrichtung 7 zueinander fluchtend angeordnet.

Somit liegen die Kreisnoppenachsen 18 der Kreisnoppengrundkörper 16 und die Kathetenkanten 21 der Dreiecknoppengrundkörper 19 einer Noppenspalte 26 jeweils auf einer gedachten, in einer zur zweiten Plattenbreitenrichtung 7 parallelen Aufreihlinie 27. Eine erste Aufreihlinie 27₁ verläuft dementsprechend durch die jeweiligen Kreisnoppenachsen 18 und Kathetenkanten 21 einer ersten Noppenspalte 26₁, eine zweite Aufreihlinie 27₂ verläuft durch die jeweiligen Kreisnoppenachsen 18 und Kathetenkanten 21 einer zweiten Noppenspalte 26₂ und eine i-te Aufreihlinie 27ᵢ verläuft durch die jeweiligen Kreisnoppenachsen 18 und Kathetenkanten 21 einer i-ten Noppenspalte 26ᵢ.

Zudem liegen die Hypotenusenflächen 20a einer Noppenspalte 26 in einer zur zweiten Plattenbreitenrichtung 7 und zur Plattenhöhenrichtung 8 parallelen Tangentialebene 28 an die Kreisnoppenmantelflächen 17 der kreiszylindrischen Kreisnoppengrundkörper 16 der Noppenspalte 26. Dementsprechend weisen die Kathetenkanten 21 der Dreiecknoppen 12 der jeweiligen Noppenspalte 26 jeweils in eine zur ersten Plattenbreitenrichtung 6 parallele Richtung.

Des Weiteren sind die Dreiecknoppen 12 von den Kreisnoppen 11 in die zweite Plattenbreitenrichtung 7 jeweils derart beabstandet, dass ein Abstand d₄ zwischen der Hypotenusenkante 22;23 des Dreiecknoppengrundkörpers 19 und einer zur ersten Plattenbreitenrichtung 6 sowie zur Plattenhöhenrichtung 8 parallelen Tangentialebene 29 an die Kreisnoppenmantelfläche 17 des zur Hypotenusenkante 22;23 jeweils benachbarten Kreisnoppengrundkörpers 16 dem Durchmesser D_{R} der zu verlegenden Rohrleitung 15 der Heizungsanlage bzw. dem Abstand d₁ entspricht. Demzufolge ein Abstand d₅ zwischen der Kathetenkante 21 des jeweiligen prismatischen Dreiecknoppengrundkörpers 19 und der Tangentialebene 29 an die Kreisnoppenmantelfläche 17 der zur Kathetenkante 21 jeweils in die zweite Plattenbreitenrichtung 7 benachbarten Kreisnoppengrundkörper 16 in etwa gleich dem Zweifachen der Kanalbreite K, insbesondere des Rohrdurchmessers D_{R}. Damit ist jeweils ein Abstand d₆ zwischen der Kathetenkante 21 eines Dreiecknoppengrundkörpers 19 und der Kreisnoppengrundkörperachse 18 der jeweils hierzu in die zweite Plattenbreitenrichtung 7 benachbarten Kreisnoppen 11 bzw. Kreisnoppengrundkörper 16 in etwa dreimal so groß wie die Kanalbreite K bzw. der Abstand d₁.

Das heißt, die in die zweite Plattenbreitenrichtung 7 zueinander benachbarten Noppenreihen 24 sind jeweils bezüglich ihrer unmittelbar benachbarten Noppenreihe 24 in die erste Plattenbreitenrichtung 6 um den Betrag 3* K bzw. 3* d₁ zueinander versetzt. Die Kreis- und Dreiecknoppen 11;12 sind also in einem quadratischen Raster bzw. Muster bzw. Gitter 13 mit einer Gitterlänge G angeordnet, wobei

Gitterlänge G = 3* K = 3*d₁ = 3* D_{K}/2.

In diesem Gitter bilden die Kreisnoppenachsen 18 und die Kathetenkanten 21 jeweils die Gitterkanten des quadratischen Gitters 13. Zudem sind die Kathetenkanten 21 und die Kreisnoppenachsen 18 des Gitters 13 jeweils abwechselnd angeordnet.

Dadurch weist die Gitterstruktur 13 sich in die erste Plattendiagonalrichtung 9 erstreckende erste Kreisnoppendiagonalreihen 30 aus Kreisnoppen 11 und sich in die erste Plattendiagonalrichtung 9 erstreckende erste Dreiecknoppendiagonalreihen 31 aus Dreiecknoppen 12 auf.

Das heißt, in jeder ersten Kreisnoppendiagonalreihe 30 ist zwischen den beiden sich in die erste Plattendiagonalrichtung 9 gegenüberliegenden Plattenkantenflächen 4;5 jede Kreisnoppe 11 in die erste Plattendiagonalrichtung 9 gesehen benachbart zu einer Kreisnoppe 11 angeordnet. Dabei sind die Kreisnoppenachsen 18 der Kreisnoppengrundkörper 16 der jeweiligen ersten Kreisnoppendiagonalreihe 30 in die erste Plattendiagonalrichtung 9 gesehen zueinander fluchtend angeordnet. Somit sind in die erste Plattendiagonalrichtung 9 gesehen die Kreisnoppen 11 einer Kreisnoppendiagonalreihe 30 zueinander fluchtend angeordnet. Die Kreisnoppenmantelflächen 17 einer Kreisnoppendiagonalreihe 30 weisen dadurch eine gemeinsame erste Tangentialebene 32 bzw. Kreisnoppendiagonalreihen-Tangentialebene 32 auf, die parallel ist zur ersten Plattendiagonalrichtung 9 sowie zur Plattenhöhenrichtung 8.

Analog hierzu ist in jeder ersten Dreiecknoppendiagonalreihe 31 zwischen den beiden sich in die erste Plattendiagonalrichtung 9 gegenüberliegenden Plattenkantenflächen 4;5 jede Dreiecknoppe 12 in die erste Plattendiagonalrichtung 9 gesehen benachbart zu einer Dreiecknoppe 12 angeordnet. Dabei sind die Kathetenkanten 21 der Dreiecknoppengrundkörper 19 der jeweiligen ersten Dreicknoppendiagonalreihe 31 in die erste Plattendiagonalrichtung 9 gesehen zueinander fluchtend angeordnet. Somit sind in die erste Plattendiagonalrichtung 9 gesehen die Dreiecknoppen 12 einer Dreiecknoppendiagonalreihe 31 zueinander fluchtend angeordnet. Die ersten Kathetenflächen 20b der Dreiecknoppen 12 einer Dreiecknoppendiagonalreihe 31 liegen dadurch auf einer gemeinsamen Tangentialebene 33 bzw. ersten Katheten-Tangentialebene 33, die parallel ist zur ersten Plattendiagonalrichtung 9 sowie zur Plattenhöhenrichtung 8. Die zweiten Kathetenflächen 20c der Dreiecknoppen 12 einer Dreiecknoppendiagonalreihe 31 liegen entsprechend auf einer gemeinsamen Tangentialebene 34 bzw. zweiten Katheten-Tangentialebene 34, die parallel ist zur zweiten Plattendiagonalrichtung 10 sowie zur Plattenhöhenrichtung 8.

Die ersten Kreisnoppen- und Dreiecknoppendiagonalreihen 30;31 sind in die zweite Plattendiagonalrichtung 10 zueinander benachbart angeordnet. Das heißt in die zweite Plattendiagonalrichtung 10 gesehen wechseln sich die ersten Kreisnoppendiagonalreihen 30 und die ersten Dreiecknoppendiagonalreihen 31 ab bzw. sind alternierend angeordnet.

Entsprechend der Gitterstruktur 13 sind die ersten Dreiecknoppendiagonalreihen 31 von den ersten Kreisnoppendiagonalreihen 30 in die zweite Plattendiagonalrichtung 10 derart beabstandet, dass ein Abstand d₇ zwischen der ersten Katheten-Tangentialebene 33 und der ersten Kreisnoppendiagonalreihen-Tangentialebene 32 der Kanalbreite K bzw. dem Abstand d₁ entspricht.

Analog zu den ersten Kreisnoppen- und Dreiecknoppendiagonalreihen 30;31 weist die Gitterstruktur 13 sich in die zweite Plattendiagonalrichtung 10 erstreckende zweite Kreisnoppendiagonalreihen 35 aus Kreisnoppen 11 und zweite Dreiecknoppendiagonalreihen 36 aus Dreiecknoppen 12 auf.

Das heißt, in jeder zweiten Kreisnoppendiagonalreihe 35 ist zwischen den beiden sich in die zweite Plattendiagonalrichtung 10 gegenüberliegenden Plattenkantenflächen 4;5 jede Kreisnoppe 11 in die zweite Plattendiagonalrichtung 10 gesehen benachbart zu einer Kreisnoppe 11 angeordnet. Dabei sind die Kreisnoppen 11 bzw. die Kreisnoppenachsen 18 der Kreisnoppengrundkörper 16 der jeweiligen zweiten Kreisnoppendiagonalreihe 35 in die zweite Plattendiagonalrichtung 10 gesehen zueinander fluchtend angeordnet. Die Kreisnoppenmantelflächen 17 einer zweiten Kreisnoppendiagonalreihe 35 weisen dadurch eine gemeinsame zweite Tangentialebene 37 bzw. Kreisnoppendiagonalreihen-Tangentialebene 37 auf, die parallel ist zur zweiten Plattendiagonalrichtung 10 sowie zur Plattenhöhenrichtung 8.

Entsprechend ist in jeder zweiten Dreiecknoppendiagonalreihe 36 zwischen den beiden sich in die zweite Plattendiagonalrichtung 10 gegenüberliegenden Plattenkantenflächen 4;5 jede Dreiecknoppe 12 in die zweite Plattendiagonalrichtung 9 gesehen benachbart zu einer Dreiecknoppe 12 angeordnet. Dabei sind die Dreiecknoppen 12 der jeweiligen zweiten Dreiecknoppendiagonalreihe 31 in die zweite Plattendiagonalrichtung 10 gesehen zueinander fluchtend angeordnet.

Die zweiten Kreisnoppen- und Dreiecknoppendiagonalreihen 35;36 sind in die erste Plattendiagonalrichtung 9 zueinander benachbart angeordnet. Das heißt in die erste Plattendiagonalrichtung 9 gesehen wechseln sich die zweiten Kreisnoppendiagonalreihen 35 und die zweiten Dreiecknoppendiagonalreihen 36 ab bzw. sind alternierend angeordnet.

Dabei sind die zweiten Dreiecknoppendiagonalreihen 36 von den zweiten Kreisnoppendiagonalreihen 35 in die erste Plattendiagonalrichtung 9 derart beabstandet, dass ein Abstand d₈ zwischen der zweiten Katheten-Tangentialebene 34 und der zweiten Kreisnoppendiagonalreihen-Tangentialebene 37 der Kanalbreite K bzw. dem Abstand d₁ entspricht.

Durch diese besondere Anordnung der Noppen 11;12 weist die Montageplatte 1 Rohraufnahmekanäle 14 zur Aufnahme der zu verlegenden Rohrleitungen 15 des Flächenheiz- oder -kühlsystems auf bzw. es werden auf der Montageplatte 1 Rohraufnahmekanäle 14 gebildet.

Ein erster Breitenrichtungs-Rohraufnahmekanal 14a wird gebildet durch alle sich in die erste Plattenbreitenrichtung 6 erstreckende Noppen 11;12 zweier zueinander in die zweite Plattenbreitenrichtung 7 benachbarten Noppenreihen 24. Insbesondere wird der erste Breitenrichtungs-Rohraufnahmekanal 14a gebildet von den Kreisnoppenmantelflächen 17 sowie den zweiten, der benachbarten Noppenreihe 24ᵢ₊₁ zugewandten Hypotenusenkanten 23 der einen Noppenreihe 24ᵢ und den Kreisnoppenmantelflächen 17 sowie den ersten, der benachbarten Noppenreihe 24ᵢ zugewandten Hypotenusenkanten 22 der anderen Noppenreihe 24ᵢ₊₁. Das heißt, die sich in die erste Plattenbreitenrichtung 6 erstreckenden Rohrleitungsabschnitte 15a liegen an den Kreisnoppenmantelflächen 17 sowie den zweiten Hypotenusenkanten 23 der einen Noppenreihe 24ᵢ und den Kreisnoppenmantelflächen 17 sowie den ersten Hypotenusenkanten 22 der anderen Noppenreihe 24ᵢ₊₁ an.

Ein zweiter Breitenrichtungs-Rohraufnahmekanal 14b wird gebildet durch sich in die zweite Plattenbreitenrichtung 7 erstreckende Noppen 11 ;12 zweier zueinander in die erste Plattenbreitenrichtung 6 benachbarter Noppenspalten 26. Insbesondere wird der zweite Breitenrichtungs-Rohraufnahmekanal 14b gebildet von den Kreisnoppenmantelflächen 17 der einen Noppenspalte 26ⱼ und den Kreisnoppenmantelflächen 17 sowie allen Hypotenusenflächen 20a der benachbarten Noppenspalte 26ⱼ₊₁. Das heißt, die sich in die zweite Plattenbreitenrichtung 7 erstreckenden Rohrleitungsabschnitte 15b liegen an den Kreisnoppenmantelflächen 17 beider benachbarter Noppenspalten 26ⱼ,26ⱼ₊ᵢ und an den Hypotenusenflächen 20a der einen Noppenspalte 26ⱼ der beiden Noppenspalten 26ⱼ,26ⱼ₊ᵢ an.

Ein erster Diagonalrichtungs-Rohraufnahmekanal 14c wird jeweils gebildet durch die sich in die erste Plattendiagonalrichtung 9 erstreckenden Noppen 11 ;12 zweier zueinander in die zweite Plattendiagonalrichtung 10 benachbarter Noppendiagonalreihen 30;31. Insbesondere wird der erste Diagonalrichtungs-Rohraufnahmekanal 14c jeweils gebildet durch alle ersten Kathetenflächen 20b einer ersten Dreiecknoppendiagonalreihe 31ᵢ und alle Kreisnoppenmantelflächen 17 der hierzu benachbarten ersten Kreisnoppendiagonalreihe 30ᵢ₊₁. Das heißt, die sich in die erste Plattendiagonalrichtung 9 erstreckenden Rohrleitungsabschnitte 15c liegen jeweils an den ersten Kathetenflächen 20b der ersten Dreiecknoppendiagonalreihe 31ᵢ und den Kreisnoppenmantelflächen 17 der hierzu benachbarten ersten Kreisnoppendiagonalreihe 30ᵢ₊₁ an.

Ein zweiter Diagonalrichtungs-Rohraufnahmekanal 14d wird jeweils gebildet durch die sich in die zweite Plattendiagonalrichtung 10 erstreckenden Noppen 11 ;12 zweier zueinander in die erste Plattendiagonalrichtung 9 benachbarter Noppendiagonalreihen 30;31. Insbesondere wird der zweite Diagonalrichtungs-Rohraufnahmekanal 14d jeweils gebildet durch alle zweiten Kathetenflächen 20c einer zweiten Dreiecknoppendiagonalreihe 36ⱼ und alle Kreisnoppenmantelflächen 17 der hierzu benachbarten zweiten Kreisnoppendiagonalreihe 35ⱼ₊₁. Das heißt, die sich in die zweite Plattendiagonalrichtung 10 erstreckenden Rohrleitungsabschnitte 15d liegen jeweils an den zweiten Kathetenflächen 20c der zweiten Dreiecknoppendiagonalreihe 36ⱼ und den Kreisnoppenmantelflächen 17 der hierzu benachbarten zweiten Kreisnoppendiagonalreihe 35ⱼ₊₁ an.

Die Kanalbreite K aller Rohraufnahmekanäle 14a;14b;14c;14d ist gleich und entspricht vorzugsweise dem Rohrdurchmesser D_{R} bzw. dem Abstand d₁ bzw. dem Abstand d₄ bzw. dem Abstand d₇ bzw. dem Abstand d₈. Dabei beträgt die Kanalbreite K insbesondere 10 bis 20 mm, bevorzugt 14 bis 18 mm und besonders bevorzugt 15 bis 17 mm.

Es liegt im Rahmen der Erfindung, dass die Kanalbreite K, die Länge des Rohrdurchmessers D_{R}, die Länge des Durchmesser des Kreisnoppengrundkörpers D_{K}, die Dreiecknoppenlänge L_{D}, die Dreiecknoppenbreite B_{D} sowie die Abstände Hypotenusenfläche zu Kreisnoppe d₁, Kathetenkante zu Kreisnoppe d₂, Hypotenusenkante zu Kreisnoppenachse d₃, Hypotenusenkante zu Kreisnoppe d₄, Kathetenkante zu Kreisnoppe d₅, Kathetenkante zu Kreisnoppenachse d₆, erste Katheten-Tangentialebene zu erste Kreisnoppendiagonalreihen-Tangentialebene d₇ und zweite Katheten-Tangentialebene zu zweite Kreisnoppendiagonalreihen-Tangentialebene d₈ die üblichen technischen Toleranzen von insbesondere +/- 1 bis 2 mm aufweisen bzw. diesen Toleranzen unterliegen.

Es liegt außerdem im Rahmen der Erfindung, dass die Noppen 11;12 eine beliebige andere geeignete Raumform als die beschriebene Zylinderform mit kreisförmiger oder dreieckiger Grundfläche aufweisen. Beispielsweise können die Noppen 11 auch die Form eines geraden Zylinders mit X-förmiger oder vieleckiger, insbesondere achteckiger, oder sternförmiger Grundfläche aufweisen. Und die Noppen 12 können beispielsweise die Form eines geraden Zylinders mit trapezförmiger Grundfläche aufweisen.

Die Montageplatte 1 besteht zweckmäßigerweise aus einem Isolierstoff, insbesondere aus EPS.

Vorzugsweise weist die Montageplatte 1 zudem eine, insbesondere tiefgezogene, Folie 38 auf (Fig. 3b). Insbesondere bedeckt die Folie 38 die Plattenoberseite 2. Besonders bevorzugt weist die Folie 38 ein der Gitterstruktur 13 der Montageplatte 1 entsprechendes Noppenprofil auf. Dabei sind die Noppen der Folie 38 zweckmäßigerweise hohl, so dass die Noppen der Folie 38 auf die Noppen 11 ;12 der Montageplatte 1 aufsteckbar sind.

Die Folie 38 dient insbesondere als Feuchtigkeitssperre und besteht vorzugsweise aus Polystyrol oder PET oder einem anderen hierfür geeigneten, insbesondere durch Tiefziehen hergestellten, Material.

Vorzugsweise weist die Montageplatte 1 zudem mehrere, insbesondere vier, Befestigungslöcher 39 zur Befestigung der Montageplatte 1 auf dem Boden auf. Die Befestigungslöcher 39 gehen jeweils von der Plattenoberseite 2 zur Plattenunterseite 3 durch die Montageplatte 1 durch und sind zweckmäßigerweise im Randbereich bzw. Eckbereich der Montageplatte 1 angeordnet.

Zum Transport und/oder zur Lagerung der Montageplatten 1 sind jeweils zwei Montageplatten 1 mit ihren Noppenseiten 2 aufeinander zu weisend derart aufeinander stapelbar, dass die Noppen 11;12 der einen Montageplatte 1 jeweils in Noppenzwischenräume der anderen Montageplatte 1 eingreifen und an der Plattenoberfläche 2 der anderen Montageplatte 1 anliegen. Hierzu weist das quadratische Gitter 13 jeweils innerhalb eines Zwischenraums zwischen den Mantelflächen 17;20 von vier benachbarten, im Abstand einer Gitterlänge G angeordneten bzw. ein Gitterelement des Gitters bildenden Noppen 11 ;12 einen Freiraum 40 bzw. Noppeneingriffsraum 40 auf. Das heißt, der Noppeneingriffsraum 40 wird jeweils begrenzt durch die Kreisnoppenmantelfläche 17 einer Kreisnoppe 11 sowie durch die Dreiecknoppenmantelfläche 20 der hierzu benachbarten Dreiecknoppe 12, z.B. durch deren erste Kathetenfläche 20b, einer Noppenreihe 24ᵢ und durch die Kreisnoppenmantelfläche 17 der zur Dreiecknoppe 12 der benachbarten Noppenreihe 24ᵢ in die zweite Breitenrichtung 7 benachbarten Kreisnoppe 11 sowie durch die Dreiecknoppenmantelfläche 20 der hierzu und zur Kreisnoppe 11 der benachbarten Noppenreihe 24ᵢ in die zweite Breitenrichtung 7 benachbarten Dreiecknoppe 12, z.B. durch deren zweite Hypotenusenkante 23, einer Noppenreihe 24ᵢ₊₁. Bzw. der Noppeneingriffsraum 40 befindet sich zwischen diesen Flächen. Vorzugsweise ist der Noppeneingriffsraum 40 rechteckig ausgebildet.

Die Noppen 11;12 von zwei mit ihren Oberseiten 2 aufeinander gestapelten Montageplatten 1 greifen somit jeweils in die Noppeneingriffsräume 40 der jeweiligen anderen Montageplatte 1 ein. Dabei weisen die Hypotenusenflächen 20a der Dreiecknoppen 12 vorzugsweise zueinander hin.

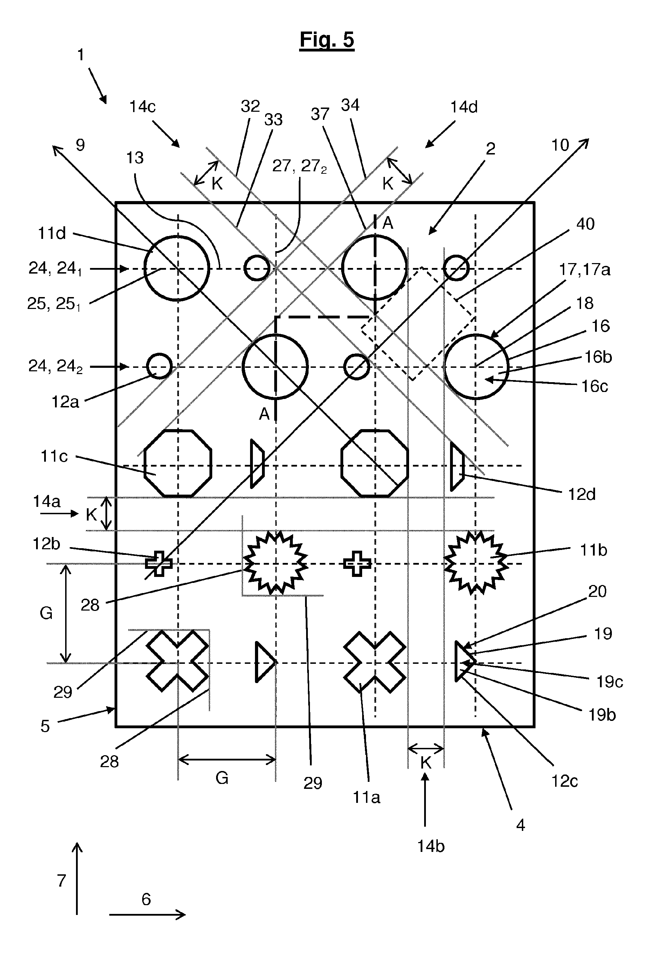

Gemäß einer weiteren Ausführung der Erfindung (Fig. 5) weist die Montageplatte 1 erste Noppen 11 und zweite Noppen 12 mit jeweils einem Noppengrundkörper mit einer beliebigen, zur Anlage der Rohrleitungen 15 geeigneten Form auf.

Die Noppengrundkörper 16 der ersten Noppen 11 weisen jeweils vorzugsweise im Wesentlichen eine gerade zylindrische Form mit einem X-förmigen (11a) oder sternförmigen (11 b) oder quadratischen oder sechs- oder mehreckigen (11 c), insbesondere kreisförmigen (11 d), Querschnitt auf. Des Weiteren weisen die Noppengrundkörper 16 analog zu obiger Beschreibung jeweils über die Noppenumfangsfläche 17 überstehende Widerlagerelemente (Fig. 6) auf.

Die Noppengrundkörper der zweiten Noppen 12 weisen jeweils vorzugsweise im Wesentlichen eine gerade zylindrische Form mit einem kreisförmigen (12a) oder kreuzförmigen (12b) oder T-förmigen oder sternförmigen oder rechteckigen oder vieleckigen, insbesondere dreieckigen (12c), oder trapezförmigen (12d) Querschnitt auf. Des Weiteren weisen die Noppengrundkörper der zweiten Noppen zweckmäßigerweise jeweils analog zu obiger Beschreibung über die Noppenumfangsfläche überstehende Widerlagerelemente auf.

Somit können die Noppen 11;12 dieselbe oder auch unterschiedliche Raumformen aufweisen.

Die Noppen 11;12 sind analog zu obiger Beschreibung in Noppenreihen 24, Noppenspalten 26 und Noppendiagonalreihen 31;36 in einem quadratischen Raster 13 angeordnet, so dass zwischen den Noppen 11;12 der einzelnen Rasterelemente jeweils ein Noppeneingriffsraum 40 zum ineinander Stapeln zweier Montageplatten 1 vorgesehen ist. Des Weiteren sind zwischen den jeweils benachbarten Noppenreihen 24, Noppenspalten 26 und Noppendiagonalreihen 31 ;36 die Rohraufnahmekanäle 14 ausgebildet.

Dabei sind jedoch im Gegensatz zur ersten Ausführungsform die Abstände zwischen den ersten und zweiten Noppen 11;12 benachbarter Noppenreihen 24 in die zweite Breitenrichtung 7 gesehen gleich oder größer als die Kanalbreite K. Das heißt, die Abstände zwischen den ersten und zweiten Noppen 11 ;12 sind in die zweite Breitenrichtung 7 gesehen nicht notwendigerweise gleich der Kanalbreite K. Somit entspricht die Kanalbreite K in die zweite Breitenrichtung 7 gesehen dem Abstand zwischen den Tangentialebenen 29 an die ersten Noppen 11 parallel zur ersten Breitenrichtung 6 und zur Höhenrichtung 8. Der erste Breitenrichtungs-Rohraufnahmekanal 14a wird demnach durch die jeweiligen Anlageflächen 17a der ersten Noppen 11 von in die zweite Breitenrichtung 7 benachbarten Noppenreihen 24 gebildet.

Ebenso sind die Abstände zwischen den ersten und zweiten Noppen 11 ;12 benachbarter Noppenspalten 26 in die erste Breitenrichtung 6 gesehen gleich oder größer der Kanalbreite K. Das heißt, die Abstände zwischen den ersten und zweiten Noppen 11;12 sind in die erste Breitenrichtung 6 gesehen nicht notwendigerweise gleich der Kanalbreite K. Somit entspricht die Kanalbreite K in die erste Breitenrichtung 6 gesehen dem Abstand zwischen den Tangentialebenen 28 an die ersten Noppen 11 parallel zur zweiten Breitenrichtung 7 und zur Höhenrichtung 8. Der zweite Breitenrichtungs-Rohraufnahmekanal 14b wird demnach durch die jeweiligen Anlageflächen 17a der ersten Noppen 11 von in die erste Breitenrichtung 6 benachbarten Noppenspalten 26 gebildet.

Die Abstände zwischen den ersten und zweiten Noppen 11;12 in die beiden Diagonalrichtungen 9;10 gesehen entsprechen analog zur ersten Ausführungsform jeweils der Kanalbreite K. Somit werden die Diagonalrichtungs-Rohraufnahmekanäle 14c;14d durch die jeweiligen Anlageflächen der Umfangsflächen 17;20 ersten und zweiten Noppen 11;12 von in die erste bzw. zweite Diagonalrichtung 9;10 benachbarten ersten und zweiten Noppendiagonalreihen 31 ;36 gebildet.

Aufgrund dieser Noppenanordnung liegen in die erste und zweite Breitenrichtung 6;7 zu verlegende Rohrleitungen 15 unabhängig von deren Rohrdurchmesser D_{R} jeweils an den zweiten Noppen 12 nicht notwendigerweise an bzw. werden von den Umfangsflächen der zweiten Noppen 12 nicht notwendigerweise klemmend gehaltert.

Des Weiteren liegen in die erste und zweite Breitenrichtung 6;7 zu verlegende Rohrleitungen 15 jeweils an den ersten Noppen 11 nur dann an bzw. werden von den Umfangsflächen der ersten Noppen 12 nur dann klemmend gehaltert, wenn der Rohrleitungsdurchmesser D_{R} der Kanalbreite K entspricht.

In die erste und zweite Diagonalrichtung 31;36 zu verlegende Rohrleitungen 15 liegen an den entsprechenden Umfangsflächen der ersten und zweiten Noppen 11;12 an, wenn der Rohrleitungsdurchmesser D_{R} der Kanalbreite K entspricht.

Die zu verlegenden Rohrleitungen 15 werden gemäß dieser zweiten Ausführung der Montageplatte 1 somit im Wesentlichen durch die Bundstege 41 an den ersten Noppen 11 gehaltert. Daher sind auf der Montageplatte 1 bzw. zwischen den Noppen 11;12 verschiedene Rohrleitungen mit unterschiedlichen Rohrleitungsdurchmessern D_{R} haltbar gegen rausrutschen in Höhenrichtung 8. Der maximale, d.h. der größte verlegbare Rohrleitungsdurchmesser D_{R} entspricht dabei der Kanalbreite K bzw. dem Abstand zwischen den Noppengrundkörpern 17 der ersten Noppen 11. Der minimale, d.h. der kleinste verlegbare Rohrleitungsdurchmesser D_{R} entspricht einem Ringbundabstand d_{Bund}, d.h. dem Abstand d_{Bund} zwischen den Tangentialebenen 28;29 an die Bundstege 41 benachbarter Noppenreihen 24, Noppenspalten 26 oder Noppendiagonalreihen 31 ;36.

Vorzugsweise weist die Oberseite 2 der Montageplatte 1 analog zur ersten Ausführungsform die Folie 38 auf.

Gemäß einer dritten Ausführungsform weist die Noppenfolie (nicht dargestellt) die Noppenstruktur bzw. Noppenanordnung gemäß der ersten oder der zweiten Ausführungsform der Montageplatte 1 auf. Des Weiteren sind die Noppen 11;12 der Folie vorzugsweise nicht hohl sondern mit dem Material der Folie 38 ausgefüllt. Des Weiteren ist ein Folienkörper der Noppenfolie, von dessen Oberseite 2 die Noppen 11 ;12 abstehen, gegenüber dem Folienkörper der aufsteckbaren Folie mit Hohlnoppen vorzugsweise dicker ausgebildet, so dass die Noppenfolie eine derartige Eigenfestigkeit aufweist, so dass die Noppenfolie alleine, d.h. unabhängig von einer Noppen aufweisenden Isolierplatte oder auf einer Isolierplatte ohne Noppen verwendbar ist.

Vorteil der erfindungsgemäßen Montageplatte 1 ist zum einen, dass die spezielle Anordnung der Noppen in der Gitterstruktur sowohl eine gerade oder mäanderförmige Verlegung der Rohrleitungen eines Flächenheiz- bzw. Flächenkühlsystems in die erste und zweite Plattenbreitenrichtung als auch eine diagonale Verlegung der Rohrleitungen in die erste und zweite Diagonalrichtung ermöglicht.

Dabei ist besonders vorteilhaft, dass die Rohrleitungen jeweils von wenigstens drei der insgesamt vier Noppen eines jeden Gitters der Gitterstruktur gehaltert werden. Daraus resultiert eine hohe Anzahl von Abstützungen für die Rohrleitungen und somit eine hohe Klemmwirkung der Noppen auf die Rohrleitungen, wodurch die Rohrleitungen auf der erfindungsgemäßen Montageplatte besonders gut gehaltert sind.

Des Weiteren wird durch die formstabilen Kreisnoppen eine hohe Trittfestigkeit der Montageplatte während des Verlegens der Rohrleitungen gewährleistet.

Zudem sind auf der erfindungsgemäßen Montageplatte verschiedene Rohrleitungsdurchmesser befestigbar. Infolgedessen ermöglicht die erfindungsgemäße Montageplatte das Verlegen von bezüglich des jeweiligen Rohrleitungsdurchmessers unterschiedlichen Rohrleitungsanordnungen, wodurch die erfindungsgemäße Montageplatte flexibel einsetzbar ist.

Weiterer Vorteil der erfindungsgemäßen Montageplatte ist, dass jeweils zwei Montageplatten mit ihren Noppenseiten derart aufeinander stapelbar sind, dass die Noppen der einen Platte jeweils in die Noppenzwischenräume der anderen Platte eingreifen. Dadurch weisen die Montageplatten in dieser ineinandergesteckten Anordnung einen geringen Platzbedarf bzw. ein besonders geringes Packmaß auf. Dies ermöglicht die Einsparung von Lagerfläche und/oder Verpackungsmaterial bei Lagerung bzw. Transport der Montageplatten.

## Patentansprüche

1. Montageplatte (1) zum Verlegen von Rohrleitungen (15) eines Heiz- bzw. Kühlkreislaufs eines Flächenheiz- und kühlsystems aufweisend:
a) eine Plattenoberseite (2) und eine Plattenunterseite (3),
b) von der Plattenoberseite (2) abstehende erste Noppen (11) und zweite Noppen (12), wobei zwischen den Noppen (11;12) sich senkrecht kreuzende Rohraufnahmekanäle (14a;14b) und sich diagonal kreuzende Rohraufnahmekanäle (14c;14d) gebildet werden,
**dadurch gekennzeichnet, dass**
die Noppen (11;12) derart angeordnet sind, dass zwei Montageplatten (1), deren Plattenoberseiten (2) einander zugewandt sind, derart aufeinander stapelbar sind, dass die Noppen (11;12) der einen Montageplatte (1) in Noppenzwischenräume zwischen den Noppen (11;12) der anderen Montageplatte (1) eingreifen.

2. Montageplatte nach Anspruch 1,
**dadurch gekennzeichnet, dass**
die Noppen (11) einen kreiszylindrischen oder mindestens sechseckigen, vorzugsweise mindestens achteckigen, zylindrischen Noppengrundkörper (16) mit einer Zylinderachse (18) und die Noppen (12) einen prismatischen Noppengrundkörper (19) mit einem rechtwinklig gleichschenkligen dreieckigen Querschnitt aufweisen.

3. Montageplatte nach Anspruch 1 oder 2,
**dadurch gekennzeichnet, dass**
die Noppen (11;12) jeweils abwechselnd jeweils in ersten Aufreihlinien (25₁,25₂,...) und jeweils in dazu senkrechten zweiten Aufreihlinien (27₁,27₂,...) angeordnet sind (Fig. 2).

4. Montageplatte nach einem der vorhergehenden Ansprüche,
**dadurch gekennzeichnet, dass**
die Noppen (11) einen Durchmesser (D_{K}) aufweisen und die Hypotenusenlänge der Noppen (12) dem Durchmesser (D_{K}) entspricht, wobei
- in der ersten Aufreihlinie (25) jeweils der Abstand der Hypotenuse von der benachbarten Noppe (11) der Hälfte des Durchmessers (D_{K}) und der Abstand der Spitze (Kathetenkante 21) der Noppe (12) von der in der Reihe folgenden Noppe (11) dem Durchmesser (D_{K}) entspricht, und wobei
- in der zweiten Aufreihlinie (27) jeweils der Abstand der Spitze (Kathetenkante 21) der Noppe (12) von der Zylinderachse (18) benachbarter Noppen (11) dem 1,5-fachen Durchmesser (D_{K}) entspricht, und wobei
- der Durchmesser (D_{K}) einem zweifachen Rohrdurchmesser (D_{R}) einer Rohrleitung (15) entspricht, die passend in die zwischen den Noppen (11 ;12) gebildeten Rohraufnahmekanäle (14a;14b;14c;14d) verlegbar ist.

5. Montageplatte nach einem der vorhergehenden Ansprüche,
**dadurch gekennzeichnet, dass**
die ersten Noppen (11) jeweils über Rohranlageflächen (17a) radial nach außen überstehende Widerlager, vorzugsweise in Form eines durchgehenden Ringbunds (41), und/oder die zweiten Noppen (12) jeweils nach außen über die Dreieckschenkelflächen (20a;20b;20c) überstehende Widerlager, vorzugsweise in Form eines durchgehenden Bundstegs, aufweisen.

6. Montageplatte nach Anspruch 1,
**dadurch gekennzeichnet, dass**
- die ersten Noppen (11) jeweils einen zylindrischen Noppengrundkörper (16) mit einem X-förmigen oder sternförmigen oder quadratischen oder sechseckigen oder vieleckigen oder kreisförmigen Querschnitt aufweisen; und
- die ersten Noppen (11) jeweils über eine Noppenumfangsfläche (17) nach außen überstehende Widerlager, vorzugsweise in Form eines durchgehenden Bundstegs (41), aufweisen; und
- die zweiten Noppen (12) einen zylindrischen Noppengrundkörper mit einem kreisförmigen oder kreuzförmigen oder T-förmigen oder sternförmigen oder rechteckigen oder vieleckigen, insbesondere dreieckigen, Querschnitt aufweisen.

7. Montageplatte nach Anspruch 6,
**dadurch gekennzeichnet, dass**
die Widerlager, insbesondere der Bundsteg (41), die Noppenumfangsfläche (17) jeweils rohraufnahmekanalseitig senkrecht zu einer Plattenhöhenrichtung (8) überragen, so dass die ersten Noppen (12) jeweils einen Hinterschnitt (42) zur Aufnahme der Rohrleitung (15) aufweisen.

8. Montageplatte nach Anspruch 6 oder 7,
**dadurch gekennzeichnet, dass**
die Noppen (11;12) jeweils abwechselnd jeweils in ersten Aufreihlinien (25₁,25₂,...) und jeweils in dazu senkrechten zweiten Aufreihlinien (27₁,27₂,...) angeordnet sind (Fig. 5).

9. Montageplatte nach einem der Ansprüche 6 bis 8,
**dadurch gekennzeichnet, dass**
- in der ersten Aufreihlinie (25) jeweils der Abstand zwischen den Noppenumfangsflächen (17) von in eine erste Breitenrichtung (6) benachbarter erster Noppen (11) und zweiter Noppen (12) gleich oder größer einer Kanalbreite (K) der Rohraufnahmekanäle (14a;14b;14c;14d) ist;
- in der zweiten Aufreihlinie (27) jeweils der Abstand zwischen den Noppenumfangsflächen (17;20) von in eine zweite Breitenrichtung (7) benachbarter erster Noppen (11) und zweiter Noppen (12) gleich oder größer der Kanalbreite (K) ist;
- in die zweite Breitenrichtung (7) gesehen der Abstand zwischen zur ersten Breitenrichtung (6) und zur Höhenrichtung (8) parallelen Tangentialebenen (29) an die Noppenumfangsflächen (17) der ersten Noppen 11 benachbarter erster Aufreihlinien (25) der Kanalbreite (K) entspricht;
- in die erste Breitenrichtung (6) gesehen der Abstand zwischen zur zweiten Breitenrichtung (7) und zur Höhenrichtung (8) parallelen Tangentialebenen (28) an die Noppenumfangsflächen (17) der ersten Noppen (11) benachbarter zweiter Aufreihlinien (27) der Kanalbreite (K) entspricht;
- in eine erste Diagonalrichtung (9) gesehen der Abstand zwischen zu einer zweiten Diagonalrichtung (10) und zur Höhenrichtung (8) parallelen Tangentialebenen an die Noppenumfangsflächen (17) der ersten Noppen (11) einer Diagonalreihe (35) aus ersten Noppen (11) und an die Noppenumfangsflächen (20) der zweiten Noppen (12) einer hierzu benachbarten Diagonalreihe (36) aus zweiten Noppen (12) der Kanalbreite (K) entspricht; und
- in eine zweite Diagonalrichtung (10) gesehen der Abstand zwischen zur ersten Diagonalrichtung (9) und zur Höhenrichtung (8) parallelen Tangentialebenen an die Noppenumfangsflächen (17) der ersten Noppen (11) einer Diagonalreihe (30) aus ersten Noppen (11) und an die Noppenumfangsflächen (20) der zweiten Noppen (12) einer hierzu benachbarten Diagonalreihe (31) aus zweiten Noppen (12) der Kanalbreite (K) entspricht.

10. Montageplatte nach einem der Ansprüche 6 bis 9,
**dadurch gekennzeichnet, dass**
die zweiten Noppen (12) jeweils über die Noppenumfangsflächen (20) nach außen überstehende Widerlager, vorzugsweise in Form eines durchgehenden Bundstegs, aufweisen.

11. Montageplatte nach einem der vorhergehenden Ansprüche,
**dadurch gekennzeichnet, dass**
die Montageplatte (1) aus einem Isolierstoff, vorzugsweise aus EPS, besteht.

12. Montageplatte nach Anspruch 10,
**dadurch gekennzeichnet, dass**
auf der Plattenoberseite (2) der Montageplatte (1) eine die Noppen (11 ;12) aufweisende Folie (38), vorzugsweise aus Polystyrol oder PET, angeordnet ist

13. Montageplatte nach einem der vorhergehenden Ansprüche,
**dadurch gekennzeichnet, dass**
die Montageplatte (1) aus Kunststoff, vorzugsweise aus Polystyrol oder PET, besteht.
